# EUROPEAN PATENT APPLICATION

(11) **EP 3 209 054 A1**
(43) Date of publication of application: **23.08.2017**
(21) Application number: 15857412.9
(22) Date of filing: 31.10.2015
(51) Int. Cl.: H04W 28/02

(54) **METHOD AND DEVICE FOR OBTAINING USER EQUIPMENT INFORMATION**

(30) Priority: 07.11.2014 WO PCT/CN2014/090654
(71) Applicant: Huawei Technologies Co., Ltd., Longgang District Shenzhen, Guangdong 518129 (CN)
(72) Inventor: LU, Wei, Shenzhen Guangdong 518129 (CN); XIA, Haitao, Shenzhen Guangdong 518129 (CN); SHI, Xiaoyan, Shenzhen Guangdong 518129 (CN)
(74) Representative: Epping - Hermann - Fischer
(86) International application number: PCT/CN2015/093482
(87) International publication number: WO 2016/070757

(57) **Abstract**

Embodiments of the present invention disclose a method for obtaining user equipment UE information, including: obtaining identification information of UE on an access network; sending request information to a mobility management entity, where the request information includes the identification information of the UE on the access network, so as to request the mobility management entity to return the UE information according to the identification information of the UE on the access network; and obtaining the UE information returned by the mobility management entity. Correspondingly, the embodiments of the present invention further disclose an apparatus for obtaining user equipment UE information. According to the present invention, UE information of one or some user equipments may be obtained, so that a core network can accordingly control user equipment, thereby improving system processing efficiency.

## Description

### TECHNICAL FIELD

The present invention relates to the field of wireless communications technologies, and in particular, to a method and an apparatus for obtaining user equipment UE information.

### BACKGROUND

A wireless communications network generally includes an access network and a core network. The access network is mainly responsible for enabling users to access the core network by using a specific wireless connection and communications technology. The core network includes three logical function entities: an MME (Mobility Management Entity, mobility management entity), a Serving SAE Gateway, and a PDN SAE Gateway, mainly responsible for call connection, charging, mobility management, and the like.

In an evolution process of the wireless communications network, some new logical function entities are introduced, and are mainly responsible for obtaining user equipment UE information from the access network and notifying the core network of the obtained UE information, so that the core network performs a related policy control operation. In an example in which an RCAF (Congestion Awareness Function, congestion awareness function apparatus) is used, the RCAF may obtain, from the access network, user plane congestion status information of the access network on which UE is located, and may notify a policy control device (such as a PCRF) of the user plane congestion status information of the access network, so that the policy control device controls user equipment of the policy control device, so as to relieve congestion. For another example, the RCAF may obtain information such as a resource use status of the access network or a data stream transmission rate of the UE.

In this process, to implement control over the user equipment, information such as an IMSI (International Mobile Subscriber Identity, international mobile subscriber identity) and a PDN ID (Packed Data Network Identifier, packet data network identity) of the user equipment needs to be first obtained, so as to locate the policy control device.

At present, when user equipment UE information is being obtained, access network identification information or location area identification information is first obtained. Then, UE information of all user equipments on an access network or in a location area is requested from a mobility management entity. That is, only the UE information of all user equipments on the entire access network or in the entire location area can be obtained, and UE information of one or some user equipments cannot be obtained. As a result, when controlling user equipment, the core network can only control all the user equipments on the entire access network or in the entire location area. However, in practice, there may be only individual user equipment that needs to be controlled on the access network or in the location area. The manner of controlling individual user equipment by controlling the user equipments on the entire access network or in the entire location area reduces system processing efficiency.

### SUMMARY

Embodiments of the present invention provide a method and an apparatus for obtaining user equipment UE information, so that UE information of one or some user equipments may be obtained, and a core network can accordingly control user equipment, thereby improving system processing efficiency.

A first aspect of an embodiment of the present invention provides an apparatus for obtaining user equipment UE information, including:
an obtaining unit, configured to obtain identification information of UE on an access network; and
a sending unit, configured to send request information to a mobility management entity, where the request information includes the identification information of the UE on the access network, so as to request the mobility management entity to return the UE information according to the identification information of the UE on the access network; where
the obtaining unit is further configured to obtain the UE information returned by the mobility management entity.

In a first possible implementation manner of the first aspect, the identification information of the UE on the access network includes an MME UE S1-AP Id and/or an eNB UE S1-AP Id.

In a second possible implementation manner of the first aspect, the obtaining unit is further configured to:
obtain mobility management entity identification information in a context of UE on the access network or mobility management entity identification information in a context of UE in a location area; and
the sending unit is specifically configured to:
   determine a mobility management entity according to the mobility management entity identification information in the context of the UE on the access network, and send a request message to the determined mobility management entity; or determine a mobility management entity according to the mobility management entity identification information in the context of the UE in the location area, and send a request message to the determined mobility management entity.

With reference to any one of the first aspect, or the first to the second possible implementation manners of the first aspect, in a third possible implementation manner, the obtaining unit is specifically configured to:
obtain identification information of UE on the access network, where the UE is determined by a core network according to UE subscription information; or obtain identification information of UE on the access network, where the UE is heavy-traffic UE and is selected by a core network.

With reference to any one of the first aspect, or the first to the third possible implementation manners of the first aspect, in a fourth possible implementation manner, the UE information includes at least one of an IMSI (International Mobile Subscriber Identity, international mobile subscriber identity), a PDN ID (Packed Data Network Identifier, packet data network identity), or network status information of the UE; and
the PDN ID includes an APN (Access Point Name, access point name), and the network status information includes user plane congestion status information and resource usage information of the access network on which the UE is located, and data stream transmission rate information of the UE.

A second aspect of an embodiment of the present invention provides a method for obtaining user equipment UE information, including:
obtaining identification information of UE on an access network;
sending request information to a mobility management entity, where the request information includes the identification information of the UE on the access network, so as to request the mobility management entity to return the UE information according to the identification information of the UE on the access network; and
obtaining the UE information returned by the mobility management entity.

In a first possible implementation manner of the second aspect, the identification information of the UE on the access network includes an MME UE S1-AP Id and/or an eNB UE S1-AP Id.

In a second possible implementation manner of the second aspect, the method further includes:
obtaining mobility management entity identification information in a context of UE on the access network or mobility management entity identification information in a context of UE in a location area; and
the sending request information to a mobility management entity includes:
   determining a mobility management entity according to the mobility management entity identification information in the context of the UE on the access network, and sending a request message to the determined mobility management entity; or determining a mobility management entity according to the mobility management entity identification information in the context of the UE in the location area, and sending a request message to the determined mobility management entity.

With reference to any one of the second aspect, or the first to the second possible implementation manners of the second aspect, in a third possible implementation manner, the obtaining identification information of UE on an access network includes:
obtaining identification information of UE on the access network, where the UE is determined by a core network according to UE subscription information; or obtaining identification information of UE on the access network, where the UE is heavy-traffic UE and is selected by a core network.

With reference to any one of the second aspect, or the first to the third possible implementation manners of the second aspect, in a fourth possible implementation manner, the UE information includes at least one of an IMSI, a PDN ID, or network status information of the UE; where
the PDN ID includes an APN, and the network status information includes user plane congestion status information and resource usage information of the access network on which the UE is located, and data stream transmission rate information of the UE.

A third aspect of an embodiment of the present invention provides an apparatus for obtaining user equipment UE information, including:
an obtaining unit, configured to obtain access network information or location area information; and
a processing unit, configured to determine a mobility management entity to which UE on the access network or in the location area is attached; where
the obtaining unit is further configured to receive UE information returned by the mobility management entity according to the access network information or the location area information.

In a first possible implementation manner of the third aspect, the processing unit is specifically configured to:
obtain mobility management entity identification information in a context of UE on the access network or mobility management entity identification information in a context of UE in the location area; and
determine, according to the mobility management entity identification information in the context of the UE on the access network, a mobility management entity to which the UE on the access network is attached; or determine, according to the mobility management entity identification information in the context of the UE in the location area, a mobility management entity to which the UE in the location area is attached.

With reference to the third aspect, or the first possible implementation manner of the third aspect, in a second possible implementation manner, the access network information includes an eNB id, and the location area information includes a cell id.

With reference to any one of the third aspect, or the first to the second possible implementation manners of the third aspect, in a third possible implementation manner, the UE information includes at least one of an IMSI, a PDN ID, or network status information of the UE; where
the PDN ID includes an APN, and the network status information includes user plane congestion status information and resource usage information of the access network on which the UE is located, and data stream transmission rate information of the UE.

A fourth aspect of an embodiment of the present invention provides a method for obtaining user equipment UE information, including:
obtaining access network information or location area information;
determining a mobility management entity to which UE on the access network or in the location area is attached; and
receiving UE information returned by the mobility management entity according to the access network information or the location area information.

In a first possible implementation manner of the fourth aspect, the determining a mobility management entity to which UE on the access network or in the location area is attached includes:
obtaining mobility management entity identification information in a context of UE on the access network or mobility management entity identification information in a context of UE in the location area; and
determining, according to the mobility management entity identification information in the context of the UE on the access network, a mobility management entity to which the UE on the access network is attached; or determining, according to the mobility management entity identification information in the context of the UE in the location area, a mobility management entity to which the UE in the location area is attached.

With reference to the fourth aspect, or the first possible implementation manner of the fourth aspect, in a second possible implementation manner, the access network information includes an eNB id, and the location area information includes a cell id.

With reference to any one of the fourth aspect, or the first to the second possible implementation manners of the fourth aspect, in a third possible implementation manner, the UE information includes at least one of an IMSI, a PDN ID, or network status information of the UE; where
the PDN ID includes an APN, and the network status information includes user plane congestion status information and resource usage information of the access network on which the UE is located, and data stream transmission rate information of the UE.

A fifth aspect of an embodiment of the present invention provides a policy control processing apparatus, including:
an obtaining unit, configured to obtain identification information of a policy control apparatus; and
a sending unit, configured to send UE information to a first policy control apparatus identified by the identification information.

In a first possible implementation manner of the fifth aspect, the sending unit is specifically configured to:
send the UE information to the first policy control apparatus by means of aggregation; and
the apparatus further includes:
   a receiving unit, configured to: if the UE is UE that cannot be identified by the first policy control apparatus, receive at least one of the following three pieces of information sent by the first policy control apparatus: a result, a cause value, or the UE information.

With reference to the first possible implementation manner of the fifth aspect, in a second possible implementation manner, the sending unit is further configured to:
send the UE information to a second policy control apparatus by means of non-aggregation.

With reference to the second possible implementation manner of the fifth aspect, in a third possible implementation manner, the sending unit is further configured to:
before sending the UE information to the second policy control apparatus by means of non-aggregation, obtain location area information or network information of the UE from a mobility management entity.

In a fourth possible implementation manner of the fifth aspect, the sending unit is specifically configured to:
send the UE information to the first policy control apparatus by means of non-aggregation.

With reference to the fourth possible implementation manner of the fifth aspect, in a fifth possible implementation manner, the sending unit is specifically configured to:
if the first policy control apparatus identified by the identification information is reset, send the UE information to the first policy control apparatus by means of non-aggregation.

With reference to either of the first or the fourth possible implementation manner of the fifth aspect, in a sixth possible implementation manner, the apparatus further includes:
a deletion unit, configured to delete identification information of the first policy control apparatus.

With reference to any one of the fifth aspect, or the first to the sixth possible implementation manners of the fifth aspect, in a seventh possible implementation manner, the policy control apparatus includes a PCRF (Policy and Charging Rule Function, policy and charging rules function entity).

With reference to any one of the fifth aspect, or the first to the seventh possible implementation manners of the fifth aspect, in an eighth possible implementation manner, the UE information includes at least one of an IMSI, a PDN ID, or network status information of the UE; where
the PDN ID includes an APN, and the network status information includes user plane congestion status information and resource usage information of an access network on which the UE is located, and data stream transmission rate information of the UE.

A sixth aspect of an embodiment of the present invention provides a policy control processing method, including:
obtaining identification information of a policy control apparatus; and
sending UE information to a first policy control apparatus identified by the identification information.

In a first possible implementation manner of the sixth aspect, the sending UE information to a first policy control apparatus identified by the identification information includes:
sending the UE information to the first policy control apparatus by means of aggregation; and
the method further includes:
   if the UE is UE that cannot be identified by the first policy control apparatus, receiving at least one of the following three pieces of information sent by the first policy control apparatus: a result, a cause value, or the UE information.

With reference to the first possible implementation manner of the sixth aspect, in a second possible implementation manner, after the receiving at least one of the following three pieces of information sent by the first policy control apparatus: a result, a cause value, or the UE information, the method further includes:
sending the UE information to a second policy control apparatus by means of non-aggregation.

With reference to the second possible implementation manner of the sixth aspect, in a third possible implementation manner, before the sending the UE information to a second policy control apparatus by means of non-aggregation, the method further includes:
obtaining location area information or network information of the UE from a mobility management entity.

In a fourth possible implementation manner of the sixth aspect, the sending UE information to a first policy control apparatus identified by the identification information includes:
sending the UE information to the first policy control apparatus by means of non-aggregation.

With reference to the fourth possible implementation manner of the sixth aspect, in a fifth possible implementation manner, the sending UE information to a first policy control apparatus identified by the identification information includes:
if the first policy control apparatus identified by the identification information is reset, sending the UE information to the first policy control apparatus by means of non-aggregation.

With reference to either of the first or the fourth possible implementation manner of the sixth aspect, in a sixth possible implementation manner, the method further includes:
deleting identification information of the first policy control apparatus.

With reference to any one of the sixth aspect, or the first to the sixth possible implementation manners of the sixth aspect, in a seventh possible implementation manner, the policy control apparatus includes a PCRF.

With reference to any one of the sixth aspect, or the first to the seventh possible implementation manners of the sixth aspect, in an eighth possible implementation manner, the UE information includes at least one of an IMSI, a PDN ID, or network status information of the UE; where
the PDN ID includes an APN, and the network status information includes user plane congestion status information and resource usage information of an access network on which the UE is located, and data stream transmission rate information of the UE.

A seventh aspect of an embodiment of the present invention provides an apparatus for obtaining user equipment UE information, where the apparatus for obtaining user equipment UE information includes a network interface, a memory, and a processor, where the memory stores a group of program code, and the processor is configured to invoke the program code stored in the memory to execute the following operations:
obtaining identification information of UE on an access network by using the network interface;
sending request information to a mobility management entity by using the network interface, where the request information includes the identification information of the UE on the access network, so as to request the mobility management entity to return the UE information according to the identification information of the UE on the access network; and
obtaining, by using the network interface, the UE information returned by the mobility management entity.

An eighth aspect of an embodiment of the present invention provides an apparatus for obtaining user equipment UE information, where the apparatus for obtaining user equipment UE information includes a network interface, a memory, and a processor, where the memory stores a group of program code, and the processor is configured to invoke the program code stored in the memory to execute the following operations:
obtaining access network information or location area information by using the network interface;
determining a mobility management entity to which UE on the access network or in the location area is attached, and sending, by using the network interface, the access network information or the location area information to the determined mobility management entity; and
receiving, by using the network interface, UE information returned by the mobility management entity according to the access network information or the location area information.

A ninth aspect of an embodiment of the present invention provides a policy control processing apparatus, where the policy control processing apparatus includes a network interface, a memory, and a processor, where the memory stores a group of program code, and the processor is configured to invoke the program code stored in the memory to execute the following operations:
obtaining identification information of a policy control apparatus; and
sending UE information to a first policy control apparatus identified by the identification information.

A tenth aspect of an embodiment of the present invention provides a computer storage medium, where the computer storage medium stores a program, and when the program is executed, some or all steps in the method for obtaining user equipment UE information according to the second aspect are performed.

An eleventh aspect of an embodiment of the present invention provides a computer storage medium, where the computer storage medium stores a program, and when the program is executed, some or all steps in the method for obtaining user equipment UE information according to the fourth aspect are performed.

A twelfth aspect of an embodiment of the present invention provides a computer storage medium, where the computer storage medium stores a program, and when the program is executed, some or all steps in the policy control processing method according to the sixth aspect are performed.

A thirteenth aspect of an embodiment of the present invention provides an apparatus for obtaining user equipment UE information, including:
an obtaining unit, configured to obtain identification information of UE on an access network; and
a sending unit, configured to send request information to a function device that stores UE identification information in a mobility management entity, where the request information includes the identification information of the UE on the access network, so as to request the function device that stores the UE identification information in the mobility management entity to return the UE information according to the identification information of the UE on the access network; where
the obtaining unit is further configured to obtain the UE information returned by the function device that stores the UE identification information in the mobility management entity.

In a first possible implementation manner of the thirteenth aspect, the request information sent by the sending unit further includes identification information of the mobility management entity, so as to request the function device that stores the UE identification information in the mobility management entity to obtain information about the mobility management entity according to the identification information of the mobility management entity.

With reference to the thirteenth aspect, or the first possible implementation manner of the thirteenth aspect, in a second possible implementation manner, the identification information of the UE on the access network includes an MME UE S1-AP Id and/or an eNB UE S1-AP Id.

With reference to any one of the thirteenth aspect, or the first to the second possible implementation manners of the thirteenth aspect, in a third possible implementation manner, the obtaining unit is specifically configured to:
obtain identification information of UE on the access network, where the UE is determined by a core network according to UE subscription information; or obtain identification information of UE on the access network, where the UE is heavy-traffic UE and is selected by a core network.

With reference to any one of the thirteenth aspect, or the first to the third possible implementation manners of the thirteenth aspect, in a fourth possible implementation manner, the UE information includes at least one of an IMSI, a PDN ID, or network status information of the UE; where
the PDN ID includes an APN, and the network status information includes user plane congestion status information and resource usage information of the access network on which the UE is located, and data stream transmission rate information of the UE.

A fourteenth aspect of an embodiment of the present invention provides a method for obtaining user equipment UE information, including:
obtaining identification information of UE on an access network;
sending request information to a function device that stores UE identification information in a mobility management entity, where the request information includes the identification information of the UE on the access network, so as to request the function device that stores the UE identification information in the mobility management entity to return the UE information according to the identification information of the UE on the access network; and
obtaining the UE information returned by the function device that stores the UE identification information in the mobility management entity.

In a first possible implementation manner of the fourteenth aspect, the request information further includes identification information of the mobility management entity, so as to request the function device that stores the UE identification information in the mobility management entity to obtain information about the mobility management entity according to the identification information of the mobility management entity.

With reference to the fourteenth aspect, or the first possible implementation manner of the fourteenth aspect, in a second possible implementation manner, the identification information of the UE on the access network includes an MME UE S1-AP Id and/or an eNB UE S1-AP Id.

With reference to any one of the fourteenth aspect, or the first to the second possible implementation manners of the fourteenth aspect, in a third possible implementation manner, the obtaining identification information of UE on an access network includes:
obtaining identification information of UE on the access network, where the UE is determined by a core network according to UE subscription information; or obtaining identification information of UE on the access network, where the UE is heavy-traffic UE and is selected by a core network.

With reference to any one of the fourteenth aspect, or the first to the third possible implementation manners of the fourteenth aspect, in a fourth possible implementation manner, the UE information includes at least one of an IMSI, a PDN ID, or network status information of the UE; where
the PDN ID includes an APN, and the network status information includes user plane congestion status information and resource usage information of the access network on which the UE is located, and data stream transmission rate information of the UE.

A fifteenth aspect of the present invention provides an apparatus for obtaining user equipment UE information, where the apparatus for obtaining user equipment UE information includes a network interface, a memory, and a processor, where the memory stores a group of program code, and the processor is configured to invoke the program code stored in the memory to execute the following operations:
obtaining identification information of UE on an access network by using the network interface;
sending, by using the network interface, request information to a function device that stores UE identification information in a mobility management entity, where the request information includes the identification information of the UE on the access network, so as to request the function device that stores the UE identification information in the mobility management entity to return the UE information according to the identification information of the UE on the access network; and
obtaining, by using the network interface, the UE information returned by the function device that stores the UE identification information in the mobility management entity.

A sixteenth aspect of an embodiment of the present invention provides a computer storage medium, where the computer storage medium stores a program, and when the program is executed, some or all steps in the method for obtaining user equipment UE information according to the fourteenth aspect are performed.

It may be learned from the foregoing that, in the embodiments of the present invention, identification information of UE on an access network may be obtained, request information may be sent to a mobility management entity, and UE information returned by the mobility management entity may be obtained, that is, UE information of one or some user equipments may be obtained, so that a core network can accordingly control user equipment according to the UE information. Therefore, in comparison with the prior art in which individual user equipment is controlled by controlling user equipments on an entire access network or in an entire location area, system processing efficiency is improved.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a first embodiment of an apparatus for obtaining user equipment UE information according to the present invention;
FIG. 2 is a schematic structural diagram of a second embodiment of an apparatus for obtaining user equipment UE information according to the present invention;
FIG. 3 is a schematic flowchart of a first embodiment of a method for obtaining user equipment UE information according to the present invention;
FIG. 4 is a schematic flowchart of a second embodiment of a method for obtaining user equipment UE information according to the present invention;
FIG. 5 is a schematic structural diagram of a third embodiment of an apparatus for obtaining user equipment UE information according to the present invention;
FIG. 6 is a schematic structural diagram of a fourth embodiment of an apparatus for obtaining user equipment UE information according to the present invention;
FIG. 7 is a schematic flowchart of a third embodiment of a method for obtaining user equipment UE information according to the present invention;
FIG. 8 is a schematic structural diagram of a first embodiment of a policy control processing apparatus according to the present invention;
FIG. 9 is a schematic structural diagram of a second embodiment of a policy control processing apparatus according to the present invention;
FIG. 10 is a schematic structural diagram of a third embodiment of a policy control processing apparatus according to the present invention;
FIG. 11 is a schematic flowchart of a first embodiment of a policy control processing method according to the present invention; and
FIG. 12 is a schematic flowchart of a second embodiment of a policy control processing method according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. A11 other embodiments obtained by a person of ordinary skill in the art based on the embodiments of the present invention without creative efforts shall fall within the protection scope of the present invention.

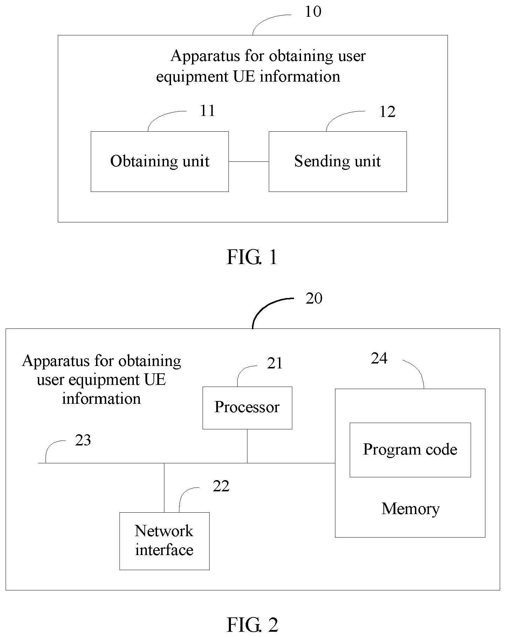

The present invention provides a method and an apparatus for obtaining user equipment UE information, to obtain UE information of one or some user equipments, so that a core network can accordingly control user equipment, so as to improve system processing efficiency. Detailed description is provided separately with reference to FIG. 1 to FIG. 4.

Referring to FIG. 1, FIG. 1 is a schematic structural diagram of a first embodiment of an apparatus for obtaining user equipment UE information according to the present invention. The apparatus for obtaining user equipment UE information provided in this embodiment of the present invention may include a congestion awareness function apparatus RCAF. The apparatus 10 for obtaining user equipment UE information shown in FIG. 1 may include at least an obtaining unit 11 and a sending unit 12.

The obtaining unit 11 is configured to obtain identification information of UE on an access network.

In an optional implementation manner, the obtaining unit 11 may obtain identification information of UE on the access network, where the UE is determined by a core network according to UE subscription information. The subscription information may include a user service, a user type (such as GoTone, or M-zone), and the like.

In another optional implementation manner, the obtaining unit 11 may obtain identification information of UE on the access network, where the UE is heavy-traffic UE on a core network. When traffic used by UE within first preset duration reaches a preset traffic threshold, the core network determines that the UE is heavy-traffic UE.

The identification information of the UE on the access network may include an MME UE S1-AP Id and/or an eNB UE S1-AP Id.

The sending unit 12 is configured to send request information to a mobility management entity, where the request information includes the identification information of the UE on the access network, so as to request the mobility management entity to return the UE information according to the identification information of the UE on the access network.

In a UMTS/GERAN system, the mobility management entity may include an MME and an SGSN (Serving GPRS Support Node, serving GPRS support node).

Specifically, when the obtaining unit 11 obtains the identification information of the UE on the access network, the sending unit 12 may send the request information to the mobility management entity, where the request information includes the identification information of the UE on the access network, so that the mobility management entity returns the UE information according to the identification information of the UE on the access network.

The UE information includes at least one of an IMSI (International Mobile Subscriber Identity, international mobile subscriber identity), a PDN ID (Packed Data Network Identify, packet data network identity), or network status information of the UE.

The PDN ID includes an APN (Access Point Name, access point name), and the network status information includes user plane congestion status information and resource usage information of the access network on which the UE is located, and data stream transmission rate information of the UE. The congestion status information may further include a congestion status and/or a congestion level, and the like.

In another optional implementation manner, the sending unit 12 may further send the request information to a function device that stores UE identification information in a mobility management entity. The device stores the UE identification information in the mobility management entity. The device further stores other information in the mobility management entity. A specific name of the device is not limited. Merely for ease of description, information in the mobility management entity is referred to as a CHR (Call History Record, call history record) in the present invention. A device that stores the information in the mobility management entity may be referred to as a CHR record function device. The information in the mobility management entity herein includes the UE identification information in the mobility management entity, and further includes other information in the mobility management entity, such as UE bearer information, which also holds true in the following.

Further, the request information sent by the sending unit 12 further includes identification information of the mobility management entity, so as to request the CHR record function device to obtain information about the mobility management entity according to the identification information of the mobility management entity.

The obtaining unit 11 is further configured to obtain the UE information returned by the CHR record function device.

When obtaining the UE information returned by the mobility management entity or the CHR record function device, the obtaining unit 11 may locate a policy control apparatus according to information such as the IMSI or the PDN ID, and sends obtained network status information to the core network, so that the core network accordingly controls corresponding user equipment, for example, congestion control, traffic control, or transmission rate control. Therefore, in comparison with the prior art in which individual user equipment is controlled by controlling user equipments on an entire access network or in an entire location area, system processing efficiency is improved.

Further, optionally, the obtaining unit 11 may further obtain mobility management entity identification information in a context of UE on the access network, and the sending unit 12 may determine a mobility management entity according to the mobility management entity identification information in the context of the UE on the access network, and send a request message to the determined mobility management entity; or the obtaining unit 11 may obtain mobility management entity identification information in a context of UE in the location area, and the sending unit 12 may determine a mobility management entity according to the mobility management entity identification information in the context of the UE in the location area, and send a request message to the determined mobility management entity. Therefore, in comparison with sending request information to all mobility management entities, a quantity of signaling is reduced.

The identification information of the mobility management entity may be determined according to GUMMEI (Globally Unique MME Identifier, globally unique MME identifier) information.

In the embodiment shown in FIG. 1, an obtaining unit may obtain identification information of UE on an access network. A sending unit sends request information to a mobility management entity. The obtaining unit obtains UE information returned by the mobility management entity, that is, may obtain UE information of one or some user equipments, so that a core network can accordingly control user equipment according to the UE information. Therefore, in comparison with the prior art in which individual user equipment is controlled by controlling user equipments on an entire access network or in an entire location area, system processing efficiency is improved.

Referring to FIG. 2, FIG. 2 is a schematic structural diagram of a second embodiment of an apparatus for obtaining user equipment UE information according to the present invention. The apparatus for obtaining user equipment UE information provided in this embodiment of the present invention may include a congestion awareness function apparatus RCAF. As shown in FIG. 2, the apparatus 20 for obtaining user equipment UE information may include at least one processor 21, for example, a CPU, a network interface 22, at least one communications bus 23, and a memory 24. The communications bus 23 is configured to implement connection and communication between these components. The network interface 22 includes at least one input interface and at least one output interface. The memory 24 may be a high-speed RAM memory, or may be a non-volatile memory (non-volatile memory), such as at least one magnetic disk memory. The memory 24 stores a group of program code, and the processor 21 is configured to invoke the program code stored in the memory 24 to perform the following operation:
obtaining identification information of UE on an access network by using the network interface 22.

In an optional implementation manner, that the processor 21 invokes the program code stored in the memory 24 to obtain identification information of UE on an access network by using the network interface 22 may be specifically:
obtaining, by using the network interface 22, identification information of UE on the access network, where the UE is determined by a core network according to UE subscription information.

In another optional implementation manner, that the processor 21 invokes the program code stored in the memory 24 to obtain identification information of UE on an access network by using the network interface 22 may be specifically:
obtaining identification information of UE on the access network by using the network interface 22, where the UE is heavy-traffic UE on a core network; and
sending request information to a mobility management entity by using the network interface 22, where the request information includes the identification information of the UE on the access network, so as to request the mobility management entity to return the UE information according to the identification information of the UE on the access network.

In an optional implementation manner, when obtaining the identification information of the UE on the access network, the processor 21 may invoke the program code stored in the memory 24 to send the request information to the mobility management entity by using the network interface 22. The request information includes the identification information of the UE on the access network, so that the mobility management entity returns the UE information according to the identification information of the UE on the access network.

In another optional implementation manner, when obtaining the identification information of the UE on the access network, the processor 21 may invoke the program code stored in the memory 24 to send the request information to a CHR record function device by using the network interface 22. The request information includes the identification information of the UE on the access network, so that the CHR record function device returns the UE information according to the identification information of the UE on the access network.

Further, the request information sent by the processor 21 further includes identification information of the mobility management entity, so as to request the CHR record function device to obtain information about the mobility management entity according to the identification information of the mobility management entity.

The UE information includes at least one of an IMSI, a PDN ID, or network status information of the UE.

The PDN ID includes an APN. The network status information includes user plane congestion status information and resource usage information of the access network on which the UE is located, and data stream transmission rate information of the UE. The congestion status information may further include a congestion status and/or a congestion level, and the like.

If invoking the program code stored in the memory 24 to send the request information to the mobility management entity by using the network interface 22, the processor 21 may obtain, by using the network interface 22, the UE information returned by the mobility management entity.

If invoking the program code stored in the memory 24 to send the request information to the CHR record function device by using the network interface 22, the processor 21 may obtain, by using the network interface 22, the UE information returned by the CHR record function device.

When obtaining the UE information returned by the mobility management entity or the CHR record function device, the processor 21 may locate a policy control apparatus according to information such as the IMSI or the PDN ID, and send, by using the network interface 22, obtained network status information to the core network, so that the core network accordingly controls corresponding user equipment, for example, congestion control, traffic control, or transmission rate control. Therefore, in comparison with the prior art in which individual user equipment is controlled by controlling user equipments on an entire access network or in an entire location area, system processing efficiency is improved.

Further, optionally, the processor 21 may further obtain mobility management entity identification information in a context of UE on the access network by using the network interface 22; then, the processor 21 invokes the program code stored in the memory 24 to determine a mobility management entity according to the mobility management entity identification information in the context of the UE on the access network, and sends a request message to the determined mobility management entity by using the network interface 22; or the processor 21 may obtain mobility management entity identification information in a context of UE in the location area by using the network interface 22; then, the processor 21 invokes the program code stored in the memory 24 to determine a mobility management entity according to the mobility management entity identification information in the context of the UE in the location area, and sends a request message to the determined mobility management entity by using the network interface 22, further reducing a quantity of signaling.

In the embodiment shown in FIG. 2, a processor may obtain identification information of UE on an access network by using a network interface, sends request information to a mobility management entity by using the network interface, and obtains, by using the network interface, UE information returned by the mobility management entity, that is, may obtain UE information of one or some user equipments, so that a core network can accordingly control user equipment according to the UE information. Therefore, in comparison with the prior art in which individual user equipment is controlled by controlling user equipments on an entire access network or in an entire location area, system processing efficiency is improved.

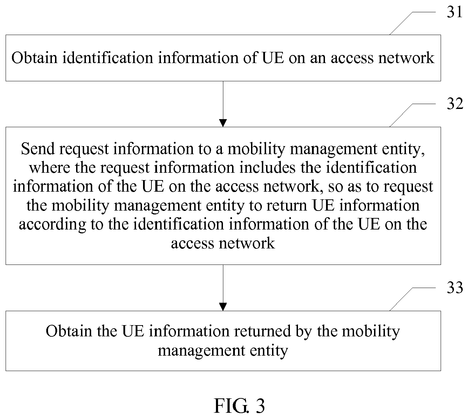

Referring to FIG. 3, FIG. 3 is a schematic flowchart of a first embodiment of a method for obtaining user equipment UE information according to the present invention. As shown in FIG. 3, a process of obtaining user equipment UE information in this embodiment of the present invention may include the following steps.

S31. Obtain identification information of UE on an access network.

In an optional implementation manner, identification information of UE on the access network may be obtained, where the UE is determined by a core network according to UE subscription information.

In another optional implementation manner, identification information of UE on the access network may be obtained, where the UE is heavy-traffic UE on a core network.

The identification information of the UE on the access network may include an MME UE S1-AP Id and/or an eNB UE S1-AP Id.

S32. Send request information to a mobility management entity, where the request information includes the identification information of the UE on the access network, so as to request the mobility management entity to return the UE information according to the identification information of the UE on the access network.

Specifically, when the identification information of the UE on the access network is obtained, the request information may be sent to the mobility management entity, where the request information includes the identification information of the UE on the access network, so that the mobility management entity returns the UE information according to the identification information of the UE on the access network.

In another optional implementation manner, the request information is sent to a CHR record function device, where the request information includes the identification information of the UE on the access network, so as to request the CHR record function device to return the UE information according to the identification information of the UE on the access network.

The UE information includes at least one of an IMSI, a PDN ID, or network status information of the UE.

The PDN ID includes an APN. The network status information includes user plane congestion status information and resource usage information of the access network on which the UE is located, and data stream transmission rate information of the UE. The congestion status information may further include a congestion status and/or a congestion level, and the like.

S33. Obtain the UE information returned by the mobility management entity.

If the request information is sent to the CHR record function device to obtain the UE information in step S32, the UE information returned by the CHR record function device is obtained in this step.

When the UE information returned by the mobility management entity or the CHR record function device is obtained, a policy control apparatus may be located according to information such as the IMSI or the PDN ID, and obtained network status information is sent to the core network, so that the core network accordingly controls corresponding user equipment, for example, congestion control, traffic control, or transmission rate control. Therefore, in comparison with the prior art in which individual user equipment is controlled by controlling user equipments on an entire access network or in an entire location area, system processing efficiency is improved.

In the embodiment shown in FIG. 3, identification information of UE on an access network may be obtained, request information may be sent to a mobility management entity, and UE information returned by the mobility management entity may be obtained, that is, UE information of one or more user equipments may be obtained, so that a core network can accordingly control user equipment according to the UE information. Therefore, in comparison with the prior art in which individual user equipment is controlled by controlling user equipments on an entire access network or in an entire location area, system processing efficiency is improved.

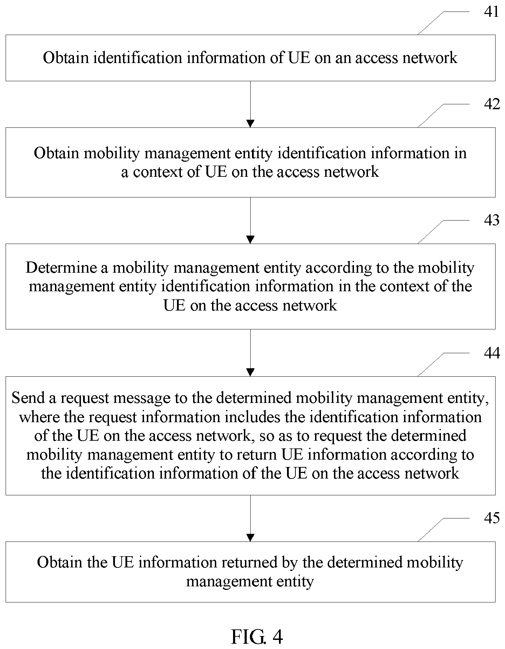

Referring to FIG. 4, FIG. 4 is a schematic flowchart of a second embodiment of a method for obtaining user equipment UE information according to the present invention. As shown in FIG. 4, a process of obtaining user equipment UE information in this embodiment of the present invention may include the following steps.

S41. Obtain identification information of UE on an access network.

In an optional implementation manner, identification information of UE on the access network may be obtained, where the UE is determined by a core network according to UE subscription information. The subscription information may include a user service, a user type (such as GoTone, or M-zone), and the like.

In another optional implementation manner, identification information of UE on the access network may be obtained, where the UE is heavy-traffic UE on a core network. When traffic used by UE within first preset duration reaches a preset traffic threshold, the core network determines that the UE is heavy-traffic UE.

The identification information of the UE on the access network may include an MME UE S1-AP Id and/or an eNB UE S1-AP Id.

S42. Obtain mobility management entity identification information in a context of UE on the access network.

The access network records identification information of a mobility management entity to which the UE is attached. The mobility management entity identification information may be determined according to GUMMEI information.

It should be noted that, in this embodiment of the present invention, mobility management entity identification information in a context of UE on an access network is obtained. In another optional embodiment, mobility management entity identification information in a context of UE in a location area may be obtained.

S43. Determine a mobility management entity according to the mobility management entity identification information in the context of the UE on the access network.

Specifically, when the mobility management entity identification information in the context of the UE on the access network is obtained, a mobility management entity may be determined according to the mobility management entity identification information in the context of the UE on the access network.

S44. Send a request message to the determined mobility management entity, where the request information includes the identification information of the UE on the access network, so as to request the determined mobility management entity to return the UE information according to the identification information of the UE on the access network.

In comparison with sending request information to all mobility management entities, sending a request message to the determined mobility management entity reduces a quantity of signaling.

In another optional implementation manner, the request message is sent to a CHR record function device, where the request information includes the identification information of the UE on the access network, or may include the mobility management entity identification information, so as to request the CHR record function device to return the UE information according to the identification information of the UE on the access network. Specifically, when receiving the request message, the CHR record function device may determine UE identification information according to the identification information of the UE on the access network; or when receiving the request message, the CHR record function device determines corresponding CHR record information according to the mobility management entity identification information, and then obtains corresponding UE identification information from the information.

The UE information includes at least one of an IMSI, a PDN ID, or network status information of the UE.

The PDN ID includes an APN. The network status information includes user plane congestion status information and resource usage information of the access network on which the UE is located, and data stream transmission rate information of the UE. The congestion status information may further include a congestion status and/or a congestion level, and the like.

It should be noted that, in this embodiment of the present invention, identification information of UE on an access network is first obtained, and then mobility management entity identification information in a context of UE on the access network is obtained. In another optional embodiment, mobility management entity identification information in a context of UE on an access network may be first obtained, and then identification information of UE on the access network may be obtained; or mobility management entity identification information in a context of UE on an access network and identification information of UE on the access network may be simultaneously obtained.

S45. Obtain the UE information returned by the determined mobility management entity.

If the request message is sent to the CHR record function device in step S44, the UE information returned by the CHR record function device is obtained in this step.

When the UE information returned by the mobility management entity or the CHR record function device is obtained, the obtained UE information may be sent to the core network, so that the core network accordingly controls corresponding user equipment, for example, congestion control, traffic control, or transmission rate control. Therefore, in comparison with the prior art in which individual user equipment is controlled by controlling user equipments on an entire access network or in an entire location area, system processing efficiency is improved.

In the embodiment shown in FIG. 4, a request message may be sent to a determined mobility management entity. In comparison with the previous embodiment, a quantity of signaling is reduced, thereby reducing network load.

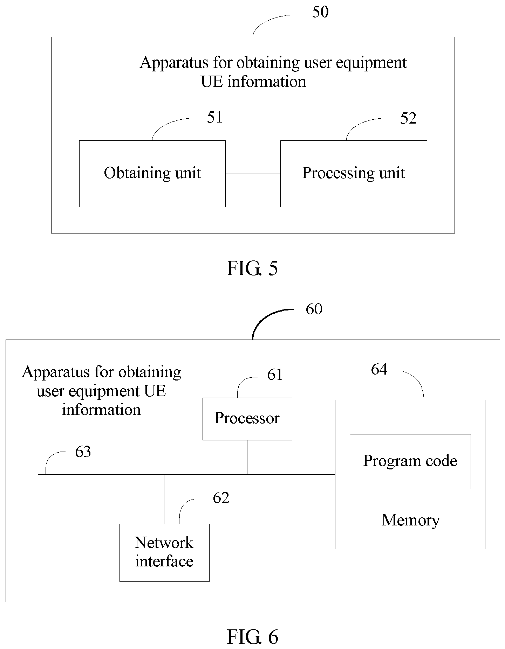

According to the method and the apparatus for obtaining user equipment UE information provided in the present invention, request information of UE information may be sent to one specific mobility management entity or some specific mobility management entities. Therefore, in comparison with sending request information of UE information to all mobility management entities in the prior art, a quantity of signaling is reduced, thereby reducing network load. Detailed description is provided separately with reference to FIG. 5 to FIG. 7.

Referring to FIG. 5, FIG. 5 is a schematic structural diagram of a third embodiment of an apparatus for obtaining user equipment UE information according to the present invention. The apparatus for obtaining user equipment UE information provided in this embodiment of the present invention may include a congestion awareness function apparatus RCAF. The apparatus 50 for obtaining user equipment UE information shown in FIG. 5 may include at least an obtaining unit 51 and a processing unit 52.

The obtaining unit 51 is configured to obtain access network information or location area information.

The access network information includes an eNB id, and the location area information includes a cell id.

The processing unit 52 is configured to determine a mobility management entity to which UE on the access network or in the location area is attached.

The processing unit 52 determines the mobility management entity to which the UE on the access network or in the location area is attached, and then sends request information of UE information to the determined mobility management entity. The request information includes the access network information or the location area information, so that the determined mobility management entity obtains UE information on a corresponding access network according to the access network information, or obtains UE information in a corresponding location area according to the location area information. Therefore, UE information is requested from one specific mobility management entity or some specific mobility management entities, reducing a quantity of signaling and further reducing network load.

The UE information includes at least one of an IMSI, a PDN ID, or network status information of the UE.

The PDN ID includes an APN. The network status information includes user plane congestion status information and resource usage information of the access network on which the UE is located, and data stream transmission rate information of the UE. The congestion status information may further include a congestion status and/or a congestion level, and the like.

Preferably, if the obtaining unit 51 obtains the access network information, the processing unit 52 may find a corresponding access network according to the access network information, obtains mobility management entity identification information from a context of UE on the access network, and determines, according to the mobility management entity identification information in the context of the UE on the access network, a mobility management entity to which the UE on the access network is attached.

If the obtaining unit 51 obtains the location area information, the processing unit 52 may find a corresponding location area according to the location area information, obtains mobility management entity identification information from a context of UE in the location area, and determines, according to the mobility management entity identification information in the context of the UE in the location area, a mobility management entity to which the UE in the location area is attached.

The mobility management entity identification information may be determined according to GUMMEI information.

The obtaining unit 51 is further configured to receive UE information returned by the mobility management entity according to the access network information or the location area information.

When obtaining the UE information returned by the mobility management entity, the obtaining unit 51 may send the obtained UE information to a core network, so that the core network accordingly controls corresponding user equipment, for example, congestion control, traffic control, or transmission rate control.

In the embodiment shown in FIG. 5, a processing unit may determine a mobility management entity to which UE on an access network or in a location area is attached, and requests UE information from the determined mobility management entity, so that UE information is requested from one specific mobility management entity or some specific mobility management entities, reducing a quantity of signaling and further reducing network load.

Referring to FIG. 6, FIG. 6 is a schematic structural diagram of a fourth embodiment of an apparatus for obtaining user equipment UE information according to the present invention. The apparatus for obtaining user equipment UE information provided in this embodiment of the present invention may include a congestion awareness function apparatus RCAF. As shown in FIG. 6, the apparatus 60 for obtaining user equipment UE information may include at least one processor 61, for example, a CPU, a network interface 62, at least one communications bus 63, and a memory 64. The communications bus 63 is configured to implement connection and communication between these components. The network interface 62 includes at least one input interface and at least one output interface. The memory 64 may be a high-speed RAM memory, or may be a non-volatile memory (non-volatile memory), such as at least one magnetic disk memory. The memory 64 stores a group of program code, and the processor 61 is configured to invoke the program code stored in the memory 64 to perform the following operations:
obtaining access network information or location area information by using the network interface 62, where the access network information includes an eNB id, and the location area information includes a cell id;
determining a mobility management entity to which UE on the access network or in the location area is attached, and sending, by using the network interface 62, the access network information or the location area information to the determined mobility management entity; and
receiving, by using the network interface 62, UE information returned by the mobility management entity according to the access network information or the location area information.

The UE information includes at least one of an IMSI, a PDN ID, or network status information of the UE.

The PDN ID includes an APN. The network status information includes user plane congestion status information and resource usage information of the access network on which the UE is located, and data stream transmission rate information of the UE. The congestion status information may further include a congestion status and/or a congestion level, and the like.

That the processor 61 invokes the program code stored in the memory 64 to determine a mobility management entity to which UE on the access network is attached may be specifically:
finding a corresponding access network according to the access network information, obtaining mobility management entity identification information from a context of UE on the access network, and determining, according to the mobility management entity identification information in the context of the UE on the access network, a mobility management entity to which the UE on the access network is attached.

That the processor 61 invokes the program code stored in the memory 64 to determine a mobility management entity to which UE in the location area is attached may be specifically:
finding a corresponding location area according to the location area information, obtaining mobility management entity identification information from a context of UE in the location area, and determining, according to the mobility management entity identification information in the context of the UE in the location area, a mobility management entity to which the UE in the location area is attached.

Optionally, the mobility management entity identification information may be determined according to GUMMEI information.

In the embodiment shown in FIG. 6, a processor may determine a mobility management entity to which UE on an access network or in a location area is attached, and requests UE information from the determined mobility management entity, so that UE information is requested from one specific mobility management entity or some specific mobility management entities, reducing a quantity of signaling and further reducing network load.

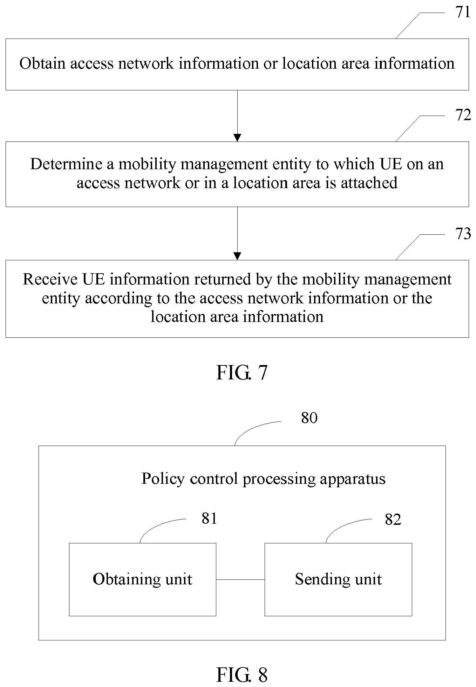

Referring to FIG. 7, FIG. 7 is a schematic flowchart of a third embodiment of a method for obtaining user equipment UE information according to the present invention. As shown in FIG. 7, a process of obtaining user equipment UE information in this embodiment of the present invention may include the following steps.

S71. Obtain access network information or location area information.

The access network information includes an eNB id, and the location area information includes a cell id.

S72. Determine a mobility management entity to which UE on the access network or in the location area is attached.

Specifically, the mobility management entity to which the UE on the access network or in the location area is attached is determined, and request information of UE information is sent to the determined mobility management entity. The request information includes the access network information or the location area information, so that the determined mobility management entity obtains UE information on a corresponding access network according to the access network information, or obtains UE information in a corresponding location area according to the location area information. Therefore, UE information is requested from one specific mobility management entity or some specific mobility management entities, reducing a quantity of signaling and further reducing network load.

Preferably, if the access network information is obtained, a corresponding access network may be found according to the access network information. Mobility management entity identification information may be obtained from a context of UE on the access network. A mobility management entity to which the UE on the access network is attached may be determined according to the mobility management entity identification information in the context of the UE on the access network.

If the location area information is obtained, a corresponding location area may be found according to the location area information. Mobility management entity identification information may be obtained from a context of UE in the location area. A mobility management entity to which the UE in the location area is attached may be determined according to the mobility management entity identification information in the context of the UE in the location area.

The mobility management entity identification information may be determined according to GUMMEI information.

S73. Receive UE information returned by the mobility management entity according to the access network information or the location area information.

The UE information includes at least one of an IMSI, a PDN ID, or network status information of the UE.

The PDN ID includes an APN. The network status information includes user plane congestion status information and resource usage information of the access network on which the UE is located, and data stream transmission rate information of the UE. The congestion status information may further include a congestion status and/or a congestion level, and the like.

When returning the UE information, the mobility management entity may locate a policy control apparatus according to information such as the IMSI or the PDN ID, and may send obtained network status information to a core network, so that the core network accordingly controls corresponding user equipment, for example, congestion control, traffic control, or transmission rate control.

In the embodiment shown in FIG. 7, a mobility management entity to which UE on an access network or in a location area is attached may be determined, and UE information may be requested from the determined mobility management entity, so that UE information is requested from one specific mobility management entity or some specific mobility management entities, reducing a quantity of signaling and further reducing network load.

According to a policy control processing method and apparatus provided in the present invention, UE information may be directly sent to a corresponding policy control apparatus according to a correspondence between a policy control apparatus and UE. Therefore, in comparison with sending UE information to a corresponding policy control apparatus only by using a routing agent in the prior art, system processing efficiency is improved. Detailed description is provided separately with reference to FIG. 8 to FIG. 12.

Referring to FIG. 8, FIG. 8 is a schematic structural diagram of a first embodiment of a policy control processing apparatus according to the present invention. The policy control processing apparatus provided in this embodiment of the present invention may include a congestion awareness function apparatus RCAF. The policy control processing apparatus 80 shown in FIG. 8 may include at least an obtaining unit 81 and a sending unit 82.

The obtaining unit 81 is configured to obtain identification information of a policy control apparatus.

The policy control processing apparatus may save, in a context of UE, identification information of a policy control apparatus corresponding to the UE. When policy control needs to be performed on one or some UEs, the obtaining unit 81 obtains identification information of a policy control apparatus corresponding to the UE.

The policy control apparatus may include a PCRF (Policy and Charging Rule Function, policy and charging rules function entity), so that the policy control apparatus searches for corresponding UE according to UE information, and performs policy control on the UE, for example, congestion control, traffic control, or transmission rate control.

The identification information of the policy control apparatus may be a Logic PCRF ID (logic PCRF identifier).

The sending unit 82 is configured to send UE information to a first policy control apparatus identified by the identification information.

The UE information includes at least one of an IMSI, a PDN ID, or network status information of the UE.

The PDN ID includes an APN. The network status information includes user plane congestion status information and resource usage information of an access network on which the UE is located, and data stream transmission rate information of the UE. The congestion status information may further include a congestion status and/or a congestion level, and the like.

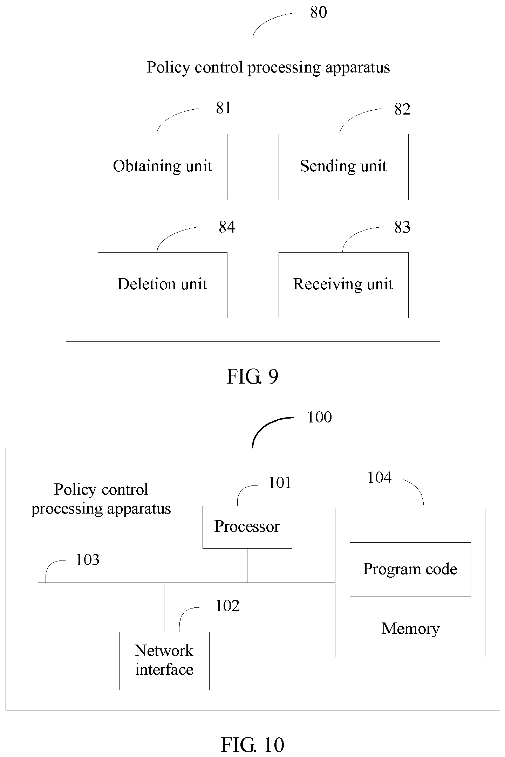

In an optional implementation manner, the sending unit 82 may send the UE information to the first policy control apparatus by means of aggregation. As shown in FIG. 9 of a schematic structural diagram of a second embodiment of a policy control processing apparatus according to an embodiment of the present invention, if the UE is UE that cannot be identified by the first policy control apparatus, the apparatus may further include a receiving unit 83, configured to receive at least one of the following three pieces of information sent by the first policy control apparatus: a result, a cause value, or the UE information.

Specifically, the sending unit 82 may aggregate together UE information corresponding to same identification information according to the identification information that is of the policy control apparatus and that is obtained by the obtaining unit 81, and may send the UE information to the first policy control apparatus identified by the identification information. In comparison with sending UE information one by one, sending the UE information to the first policy control apparatus by means of aggregation improves transmission efficiency. If the UE is UE that cannot be identified by the first policy control apparatus, the receiving unit 83 receives at least one of the following three pieces of information sent by the first policy control apparatus: a result, a cause value, or the UE information.

Further, if the receiving unit 83 receives at least one of the following three pieces of information sent by the first policy control apparatus: a result, a cause value, or the UE information, the sending unit 82 may further send the UE information to a second policy control apparatus by means of non-aggregation, that is, send, one by one to the second policy control apparatus, information about UE that cannot be identified.

The second policy control apparatus may be the first policy control apparatus, or may be another policy control apparatus different from the first policy control apparatus. This is not limited in the present invention.

Optionally, if the policy control apparatus performs session deactivation on the UE, the receiving unit 83 may receive a session deactivation message sent by the policy control apparatus.

Specifically, if the receiving unit 83 receives at least one of the following three pieces of information sent by the policy control apparatus: a result, a cause value, or the UE information, the sending unit 81 may send the UE information to a routing agent DRA, so that the routing agent DRA finds the policy control apparatus according to the UE information, and sends the UE information to the policy control apparatus, so that the policy control apparatus performs policy control on the UE, ensuring user equipment processing.

Still further, the sending unit 82 may be further configured to: before sending the UE information to the second policy control apparatus, obtain location area information or network information of the UE from a mobility management entity.

Specifically, if the receiving unit 83 receives at least one of the following three pieces of information sent by the policy control apparatus: a result, a cause value, or the UE information, the sending unit 82 may obtain the location area information of the UE from the mobility management entity. The location area information records a location area in which the UE is currently located. The sending unit 82 may send the UE information to the second policy control apparatus according to the location area information. If determining a routing agent DRA according to the location area information, the sending unit 82 sends the UE information to the determined routing agent DRA, so that the routing agent DRA finds the second policy control apparatus according to the UE information, and sends the UE information to the second policy control apparatus, reducing a quantity of signaling.

If the receiving unit 83 receives at least one of the following three pieces of information sent by the first policy control apparatus: a result, a cause value, or the UE information, the sending unit 82 may obtain the network information of the UE from the mobility management entity. The network information includes network attachment information of the UE. If the network information records that the UE currently is attached to a network, the network information may further include current access network information or current location area information of the UE. The sending unit 82 may send the UE information to the second policy control apparatus according to the network information, reducing a quantity of signaling; or if the network information records that the UE currently is not attached to a network, the sending unit 82 may obtain the network information of the UE from the mobility management entity after preset waiting duration.

In another optional implementation manner, if the obtaining unit 81 obtains the identification information of the policy control apparatus, the sending unit 82 may send the UE information to the first policy control apparatus by means of non-aggregation.

Preferably, if the first policy control apparatus identified by the identification information is reset, the sending unit 82 sends the UE information to the first policy control apparatus by means of non-aggregation.

Specifically, if after saving the identification information of the policy control apparatus, the policy control processing apparatus senses that the policy control apparatus is faulty or reset, the sending unit 82 sends the UE information to the policy control apparatus by means of non-aggregation.

It should be noted that the policy control processing apparatus may sense that the policy control apparatus is faulty or reset according to a heartbeat mechanism of a signaling connection between devices, or in another manner. This is not limited in the present invention.

Still further, as shown in FIG. 9 of a schematic structural diagram of a second embodiment of a policy control processing apparatus according to the present invention, the policy control processing apparatus 80 may further include a deletion unit 84. The deletion unit 84 is configured to delete identification information of the first policy control apparatus.

If the receiving unit 83 receives at least one of the following three pieces of information sent by the first policy control apparatus: a result, a cause value, or the UE information, or receives a session deactivation message sent by the first policy control apparatus, or the first policy control apparatus is reset or faulty, the deletion unit 84 may delete the identification information of the first policy control apparatus.

In the embodiment shown in FIG. 8 or FIG. 9, a sending unit may send UE information to a policy control apparatus according to a correspondence between a policy control apparatus and UE by means of aggregation. If a receiving unit receives at least one of the following three pieces of information sent by the policy control apparatus: a result, a cause value, or the UE information, or the policy control apparatus is reset, the sending unit may send the UE information to the policy control apparatus by means of non-aggregation, thereby improving system processing efficiency.

Referring to FIG. 10, FIG. 10 is a schematic structural diagram of a third embodiment of a policy control processing apparatus according to the present invention. The policy control processing apparatus provided in this embodiment of the present invention may include a congestion awareness function apparatus RCAF. As shown in FIG. 10, the policy control processing apparatus 100 may include at least one processor 101, for example, a CPU, a network interface 102, at least one communications bus 103, and a memory 104. The communications bus 103 is configured to implement connection and communication between these components. The network interface 102 includes at least one input interface and at least one output interface. The memory 104 may be a high-speed RAM memory, or may be a non-volatile memory (non-volatile memory), such as at least one magnetic disk memory. The memory 104 stores a group of program code, and the processor 101 is configured to invoke the program code stored in the memory 104 to perform the following operation:
obtaining identification information of a policy control apparatus.

The memory 104 may save, in a context of UE, identification information of a policy control apparatus corresponding to the UE. When policy control needs to be performed on one or some UEs, the processor 101 may be configured to invoke the program code stored in the memory 104 to obtain the identification information of the policy control apparatus corresponding to the UE.

The policy control apparatus may include a PCRF (Policy and Charging Rule Function, policy and charging rules function entity), so that the policy control apparatus searches for corresponding UE according to UE information, and performs policy control on the UE, for example, congestion control, traffic control, or transmission rate control.

The identification information of the policy control apparatus may be a Logic PCRF ID (logic PCRF identifier).

UE information is sent, by using the network interface 102, to a first policy control apparatus identified by the identification information.

The UE information includes at least one of an IMSI, a PDN ID, or network status information of the UE.

The PDN ID includes an APN. The network status information includes user plane congestion status information and resource usage information of an access network on which the UE is located, and data stream transmission rate information of the UE. The congestion status information may further include a congestion status and/or a congestion level, and the like.

In an optional implementation manner, that the processor 101 may invoke the program code stored in the memory 104 to send UE information to a first policy control apparatus identified by the identification information may be specifically:
sending the UE information to the first policy control apparatus by means of aggregation; and
if the UE is UE that cannot be identified by the first policy control apparatus, receiving at least one of the following three pieces of information sent by the first policy control apparatus: a result, a cause value, or the UE information.

Specifically, the processor 101 may aggregate together UE information corresponding to same identification information according to the obtained identification information of the policy control apparatus, and may send, by using the network interface 103, the UE information to the first policy control apparatus identified by the identification information. In comparison with sending UE information one by one, sending the UE information to the first policy control apparatus by means of aggregation improves transmission efficiency. If the UE is UE that cannot be identified by the first policy control apparatus, the processor 101 may receive, by using the network interface 103, at least one of the following three pieces of information sent by the first policy control apparatus: a result, a cause value, or the UE information.

Further, after receiving, by using the network interface 103, at least one of the following three pieces of information sent by the first policy control apparatus: a result, a cause value, or the UE information, the processor 101 may further perform the following operation by using the network interface 103:
sending the UE information to a second policy control apparatus by means of non-aggregation.

That is, information about UE that cannot be identified is sent to the second policy control apparatus one by one.

The second policy control apparatus may be the first policy control apparatus, or may be another policy control apparatus different from the first policy control apparatus. This is not limited in the present invention.

Optionally, if the policy control apparatus performs session deactivation on the UE, the processor 101 may receive, by using the network interface 103, a session deactivation message sent by the policy control apparatus.

Specifically, if receiving at least one of the following three pieces of information sent by the policy control apparatus: a result, a cause value, or the UE information, the processor 103 may send the UE information to a routing agent DRA by using the network interface 103, so that the routing agent DRA finds the policy control apparatus according to the UE information, and sends the UE information to the policy control apparatus, so that the policy control apparatus performs policy control on the UE, ensuring user equipment processing.

Still further, before sending the UE information to the second policy control apparatus by means of non-aggregation by using the network interface 103, the processor 101 may further perform the following operation:
obtaining location area information or network information of the UE from a mobility management entity.

Specifically, if the processor 101 receives, by using the network interface 103, at least one of the following three pieces of information sent by the policy control apparatus: a result, a cause value, or the UE information, the processor 101 may obtain the location area information of the UE from the mobility management entity by using the network interface 103. The location area information records a location area in which the UE is currently located. The processor 101 may send the UE information to the second policy control apparatus according to the location area information by using the network interface 103. If a routing agent DRA is determined according to the location area information, the UE information is sent to the determined routing agent DRA, so that the routing agent DRA finds the second policy control apparatus according to the UE information, and sends the UE information to the second policy control apparatus, reducing a quantity of signaling.

If the processor 101 receives, by using the network interface 103, at least one of the following three pieces of information sent by the first policy control apparatus: a result, a cause value, or the UE information, the processor 101 may obtain the network information of the UE from the mobility management entity by using the network interface 103. The network information includes network attachment information of the UE. If the network information records that the UE currently is attached to a network, the network information may further include current access network information or current location area information of the UE. The processor 101 may send the UE information to the second policy control apparatus according to the network information by using the network interface 103, reducing a quantity of signaling; or if the network information records that the UE currently is not attached to a network, the processor 101 may obtain, by using the network interface 103, the network information of the UE from the mobility management entity after preset waiting duration.

In another optional implementation manner, that the processor 101 may invoke the program code stored in the memory 104 to send UE information to a first policy control apparatus identified by the identification information may be specifically:
sending the UE information to the first policy control apparatus by means of non-aggregation.

Preferably, if the first policy control apparatus identified by the identification information is reset, the processor 101 may invoke the program code stored in the memory 104 to send the UE information to the first policy control apparatus by means of non-aggregation.

Specifically, if after saving the identification information of the policy control apparatus, the policy control processing apparatus senses that the policy control apparatus is faulty or reset, the policy control processing apparatus sends the UE information to the policy control apparatus by means of non-aggregation.

It should be noted that the policy control processing apparatus may sense that the policy control apparatus is faulty or reset according to a heartbeat mechanism of a signaling connection between devices, or in another manner. This is not limited in the present invention.

Still further, the processor 101 may further invoke the program code stored in the memory 104 to perform the following operation:
deleting identification information of the first policy control apparatus.

If the processor 101 receives at least one of the following three pieces of information sent by the first policy control apparatus: a result, a cause value, or the UE information, or receives a session deactivation message sent by the first policy control apparatus, or the first policy control apparatus is reset or faulty, the processor 101 may delete the identification information of the first policy control apparatus.

In the embodiment shown in FIG. 10, a processor may send UE information to a policy control apparatus according to a correspondence between a policy control apparatus and UE by means of aggregation. If the processor receives at least one of the following three pieces of information sent by the policy control apparatus: a result, a cause value, or the UE information, or the policy control apparatus is reset, the processor may send the UE information to the policy control apparatus by means of non-aggregation, thereby improving system processing efficiency.

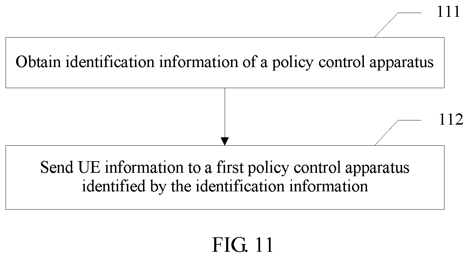

Referring to FIG. 11, FIG. 11 is a schematic flowchart of a first embodiment of a policy control processing method according to the present invention. As shown in FIG. 11, a policy control processing procedure in this embodiment of the present invention may include the following steps.

S111. Obtain identification information of a policy control apparatus.

A policy control processing apparatus may save, in a context of UE, identification information of a policy control apparatus corresponding to the UE. When policy control needs to be performed on one or some UEs, the obtaining unit 81 obtains identification information of a policy control apparatus corresponding to the UE.

The policy control apparatus may include a PCRF (Policy and Charging Rule Function, policy and charging rules function entity), so that the policy control apparatus searches for corresponding UE according to UE information, and performs policy control on the UE, for example, congestion control, traffic control, or transmission rate control.

The identification information of the policy control apparatus may be a Logic PCRF ID (logic PCRF identifier).

S112. Send UE information to a first policy control apparatus identified by the identification information.

The UE information includes at least one of an IMSI, a PDN ID, or network status information of the UE.

The PDN ID includes an APN. The network status information includes user plane congestion status information and resource usage information of an access network on which the UE is located, and data stream transmission rate information of the UE. The congestion status information may further include a congestion status and/or a congestion level, and the like.

In an optional implementation manner, the UE information may be sent to the first policy control apparatus by means of aggregation. If the UE is UE that cannot be identified by the first policy control apparatus, at least one of the following three pieces of information sent by the first policy control apparatus is received: a result, a cause value, or the UE information.

Specifically, UE information corresponding to same identification information may be aggregated together according to the obtained identification information of the policy control apparatus, and the UE information may be sent to the first policy control apparatus identified by the identification information. In comparison with sending UE information one by one, sending the UE information to the first policy control apparatus by means of aggregation improves transmission efficiency. If the UE is UE that cannot be identified by the first policy control apparatus, at least one of the following three pieces of information sent by the first policy control apparatus is received: a result, a cause value, or the UE information.

Further, if at least one of the following three pieces of information sent by the first policy control apparatus is received: a result, a cause value, or the UE information, the UE information may further be sent to a second policy control apparatus by means of non-aggregation, that is, information about UE that cannot be identified may be sent to the second policy control apparatus one by one.

The second policy control apparatus may be the first policy control apparatus, or may be another policy control apparatus different from the first policy control apparatus. This is not limited in the present invention.

Optionally, if the policy control apparatus performs session deactivation on the UE, a session deactivation message sent by the policy control apparatus may be received.

Specifically, if at least one of the following three pieces of information sent by the policy control apparatus is received: a result, a cause value, or the UE information, the UE information may be sent to a routing agent DRA, so that the routing agent DRA finds the policy control apparatus according to the UE information, and sends the UE information to the policy control apparatus, so that the policy control apparatus performs policy control on the UE, ensuring user equipment processing.

Still further, before the UE information is sent to the second policy control apparatus, location area information or network information of the UE may be obtained from a mobility management entity.

Specifically, if at least one of the following three pieces of information sent by the policy control apparatus is received: a result, a cause value, or the UE information, the location area information of the UE may be obtained from the mobility management entity. The location area information records a location area in which the UE is currently located. The UE information may be sent to the second policy control apparatus according to the location area information. If a routing agent DRA is determined according to the location area information, the UE information is sent to the determined routing agent DRA, so that the routing agent DRA finds the second policy control apparatus according to the UE information, and sends the UE information to the second policy control apparatus, reducing a quantity of signaling.

If at least one of the following three pieces of information sent by the first policy control apparatus is received: a result, a cause value, or the UE information, the network information of the UE may be obtained from the mobility management entity. The network information includes network attachment information of the UE. If the network information records that the UE currently is attached to a network, the network information may further include current access network information or current location area information of the UE. The UE information may be sent to the second policy control apparatus according to the network information, reducing a quantity of signaling; or if the network information records that the UE currently is not attached to a network, the network information of the UE may be obtained from the mobility management entity after preset waiting duration.

In another optional implementation manner, if the identification information of the policy control apparatus is obtained, the UE information may be sent to the first policy control apparatus by means of non-aggregation.

Preferably, if the first policy control apparatus identified by the identification information is reset, the UE information is sent to the first policy control apparatus by means of non-aggregation.

Specifically, if after saving the identification information of the policy control apparatus, the policy control processing apparatus senses that the policy control apparatus is faulty or reset, the policy control processing apparatus sends the UE information to the policy control apparatus by means of non-aggregation.

It should be noted that the policy control processing apparatus may sense that the policy control apparatus is faulty or reset according to a heartbeat mechanism of a signaling connection between devices, or in another manner. This is not limited in the present invention.

In the embodiment shown in FIG. 11, UE information may be sent to a policy control apparatus according to a correspondence between a policy control apparatus and UE by means of aggregation. If at least one of the following three pieces of information sent by the policy control apparatus is received: a result, a cause value, or the UE information, or the policy control apparatus is reset, the UE information may be sent to the policy control apparatus by means of non-aggregation, thereby improving system processing efficiency.

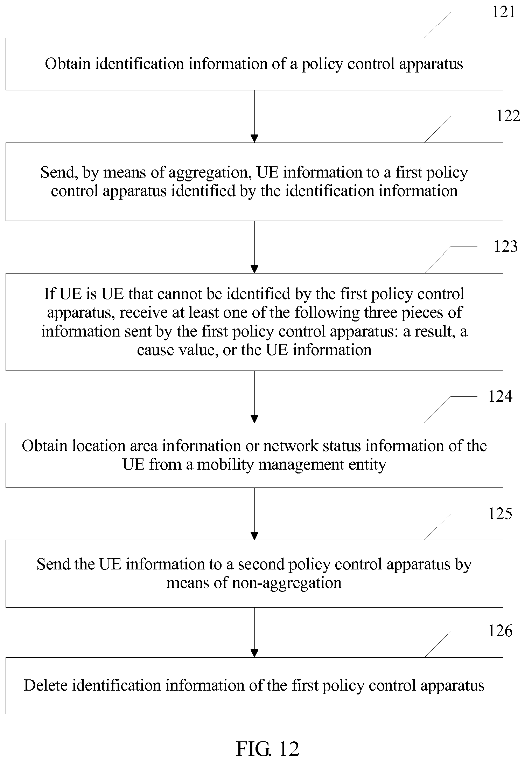

Referring to FIG. 12, FIG. 12 is a schematic flowchart of a second embodiment of a policy control processing method according to the present invention. As shown in FIG. 12, a policy control processing procedure in this embodiment of the present invention may include the following steps.

S121. Obtain identification information of a policy control apparatus.

A policy control processing apparatus may save, in a context of UE, identification information of a policy control apparatus corresponding to the UE. When policy control needs to be performed on one or some UEs, the obtaining unit 81 obtains identification information of a policy control apparatus corresponding to the UE.

The policy control apparatus may include a PCRF (Policy and Charging Rule Function, policy and charging rules function entity), so that the policy control apparatus searches for corresponding UE according to UE information, and performs policy control on the UE, for example, congestion control, traffic control, or transmission rate control.

The identification information of the policy control apparatus may be a Logic PCRF ID (logic PCRF identifier).

S122. Send, by means of aggregation, UE information to a first policy control apparatus identified by the identification information.

The UE information includes at least one of an IMSI, a PDN ID, or network status information of the UE.

The PDN ID includes an APN. The network status information includes user plane congestion status information and resource usage information of an access network on which the UE is located, and data stream transmission rate information of the UE. The congestion status information may further include a congestion status and/or a congestion level, and the like.

Specifically, UE information corresponding to same identification information may be aggregated together according to the obtained identification information of the policy control apparatus, and the UE information may be sent to the first policy control apparatus identified by the identification information. In comparison with sending UE information one by one, sending the UE information to the first policy control apparatus by means of aggregation improves transmission efficiency.

S123. If the UE is UE that cannot be identified by the first policy control apparatus, receive at least one of the following three pieces of information sent by the first policy control apparatus: a result, a cause value, or the UE information.

Specifically, after the UE information is sent, by means of aggregation, to the first policy control apparatus identified by the identification information, if the UE is UE that cannot be identified by the first policy control apparatus, at least one of the following three pieces of information sent by the first policy control apparatus is received: a result, a cause value, or the UE information.

S124. Obtain location area information or network information of the UE from a mobility management entity.

Specifically, if at least one of the following three pieces of information sent by the policy control apparatus is received: a result, a cause value, or the UE information, the location area information of the UE may be obtained from the mobility management entity. The location area information records a location area in which the UE is currently located. The UE information may be sent to a second policy control apparatus according to the location area information. If a routing agent DRA is determined according to the location area information, the UE information is sent to the determined routing agent DRA, so that the routing agent DRA finds the second policy control apparatus according to the UE information, and sends the UE information to the second policy control apparatus, reducing a quantity of signaling.

If at least one of the following three pieces of information sent by the first policy control apparatus is received: a result, a cause value, or the UE information, the network information of the UE may be obtained from the mobility management entity. The network information includes network attachment information of the UE. If the network information records that the UE currently is attached to a network, the network information may further include current access network information or current location area information of the UE. The UE information may be sent to the second policy control apparatus according to the network information, reducing a quantity of signaling; or if the network information records that the UE currently is not attached to a network, the network information of the UE may be obtained from the mobility management entity after preset waiting duration.

S125. Send the UE information to a second policy control apparatus by means of non-aggregation.

Specifically, if at least one of the following three pieces of information sent by the first policy control apparatus is received: a result, a cause value, or the UE information, and the location area information or the network information of the UE is obtained by using the mobility management entity, information about UE that cannot be identified may be sent to the second policy control apparatus one by one.

The second policy control apparatus may be the first policy control apparatus, or may be another policy control apparatus different from the first policy control apparatus. This is not limited in the present invention.

It should be noted that, in this embodiment of the present invention, after at least one of the following three pieces of information sent by the first policy control apparatus is received: a result, a cause value, or the UE information, the step of obtaining location area information or network information of the UE from a mobility management entity is first performed, and then the step of sending the UE information to a second policy control apparatus by means of non-aggregation is performed. In another optional embodiment, after at least one of the following three pieces of information sent by the first policy control apparatus is received: a result, a cause value, or the UE information, the step of sending the UE information to a second policy control apparatus by means of non-aggregation may be directly performed.

S126. Delete identification information of the first policy control apparatus.

When the UE information is sent to the second policy control apparatus by means of non-aggregation, the identification information of the first policy control apparatus may be deleted.

It should be noted that, in this embodiment of the present invention, the deleting identification information of the first policy control apparatus is performed after the sending the UE information to a second policy control apparatus by means of non-aggregation. In another optional embodiment, the deleting identification information of the first policy control apparatus may be performed when at least one of the following three pieces of information sent by the first policy control apparatus is received: a result, a cause value, or the UE information, or a session deactivation message sent by the first policy control apparatus is received.

In the embodiment shown in FIG. 12, UE information may be sent to a policy control apparatus according to a correspondence between a policy control apparatus and UE by means of aggregation. If at least one of the following three pieces of information sent by the policy control apparatus is received: a result, a cause value, or the UE information, or the policy control apparatus is reset, the UE information may be sent to the policy control apparatus by means of non-aggregation, thereby improving system processing efficiency.

An embodiment of the present invention further provides a computer storage medium, where the computer storage medium may store a program, and when the program is executed, some or all of the steps of the method described in the embodiment of the present invention with reference to FIG. 3 or FIG. 4 are performed.

An embodiment of the present invention further provides a computer storage medium, where the computer storage medium may store a program, and when the program is executed, some or all of the steps of the method described in the embodiment of the present invention with reference to FIG. 7 are performed.

An embodiment of the present invention further provides a computer storage medium, where the computer storage medium may store a program, and when the program is executed, some or all of the steps of the method described in the embodiment of the present invention with reference to FIG. 11 or FIG. 12 are performed.

A reference term such as "one embodiment", "some embodiments", "example", "specific example", or "some examples" described in this specification means that specific characteristics, structures, materials, or features described with reference to the embodiment or the example are included in at least one embodiment or example of the present invention. In the specification, the foregoing example expressions of the terms are not necessarily with respect to a same embodiment or example. In addition, the described specific features, structures, materials, or characteristics may be combined in a proper manner in any one or more of the embodiments or examples. In addition, a person skilled in the art may integrate or combine different embodiments or examples and characteristics of different embodiments or examples described in the specification, as long as they do not conflict each other.

In addition, the terms "first" and "second" are merely intended for a purpose of description, and shall not be understood as an indication or implication of relative importance or implicit indication of the number of indicated technical features. Therefore, a feature limited by "first" or "second" may explicitly or implicitly include at least one of the feature. "Multiple" described in the present invention indicates at least two, for example, two or three, unless there is a specific limitation.

A description of any process or method described in a flowchart or in another manner herein may be understood as a module, a fragment, or a part of code including one or more executable instructions for implementing steps of a specific logical function or process. In addition, preferred implementation manners of the present invention include an additional implementation. Functions may not be performed in a shown or discussed sequence but may be performed basically at the same time or in a reverse sequence according to involved functions, and this should be understood by a person skilled in the art within which the embodiments of the present invention fall.

A logic and/or a step represented in the flowchart or described in another manner herein, for example, may be considered as a program list of an executable instruction used for implementing a logical function, and may be specifically implemented in any computer readable medium, so as to be used by an instruction execution system, apparatus, or device (such as a computer-based system, including a system of a processor or another system that can obtain an instruction from the instruction execution system, apparatus, or device and can perform the instruction) or used in combination with the instruction execution system, apparatus, or device. In terms of this specification, the "computer readable medium" may be any apparatus that may include, store, communicate, broadcast, or transmit a program, so that the apparatus can be used by the instruction execution system, apparatus, or device or can be used in combination with the instruction execution system, apparatus, or device. More specific examples (non-exhaustive list) of the computer readable medium are as follows: an electrical connection part (electronic apparatus) having one or more cables, a portable computer disk box (magnetic device), a random access memory (RAM), a read-only memory (ROM), an erasable programmable read-only memory (EPROM or flash memory), an optical fiber device, and a portable compact disc read-only memory (CDROM). In addition, for example, the program can be obtained in an electronic manner by performing optical scanning on paper or another medium, and then performing editing and interpretation, or performing processing in another proper manner if necessary, and then the program is stored in a computer memory. Therefore, the computer readable medium may further be a piece of paper on which the program can be printed, or another proper medium.

It should be understood that all parts of the present invention may be implemented by using one or a combination of hardware, software, or firmware. In the foregoing implementation manner, multiple steps or methods may be implemented by using software or firmware stored in the memory and executed by a proper instruction execution system. For example, similar to another implementation manner, if the steps or the methods are implemented by using the hardware, any one or a combination of the following common technologies in the prior art may be used: a discrete logic circuit having a logic gate circuit used to implement a logical function for a data signal, an application-specific integrated circuit having a proper combination logic gate circuit, a programmable gate array (PGA), a field programmable gate array (FPGA), and the like.

A person of ordinary skill in the art may understand that all or some of the steps of the method embodiments may be implemented by a program instructing relevant hardware. The program may be stored in a computer readable storage medium. When the program runs, one or a combination of the steps of the method embodiments are performed.

In addition, functional units in the embodiments of the present invention may be integrated into one processing module, or each of the units may exist alone physically, or two or more units are integrated into one module. The integrated module may be implemented in a form of hardware, or may be implemented in a form of a software functional module. When the integrated module is implemented in the form of a software functional module and sold or used as an independent product, the integrated unit may be stored in a computer-readable storage medium.

The foregoing storage medium may be a read-only memory, a magnetic disk or an optical disk. Although the embodiments of the present invention are shown and described above, it can be understood that, the foregoing embodiments are examples, and cannot be construed as a limitation to the present invention. Within the scope of the present invention, a person of ordinary skill in the art may make changes, modifications, replacement, and variations to the foregoing embodiments.

## Claims

1. An apparatus for obtaining user equipment UE information, comprising:
an obtaining unit, configured to obtain identification information of UE on an access network; and
a sending unit, configured to send request information to a mobility management entity, wherein the request information comprises the identification information of the UE on the access network, so as to request the mobility management entity to return the UE information according to the identification information of the UE on the access network; wherein
the obtaining unit is further configured to obtain the UE information returned by the mobility management entity.

2. The apparatus according to claim 1, wherein the identification information of the UE on the access network comprises an MME UE S1-AP Id and/or an eNB UE S1-AP Id.

3. The apparatus according to claim 1, wherein the obtaining unit is further configured to:
obtain mobility management entity identification information in a context of UE on the access network or mobility management entity identification information in a context of UE in a location area; and
the sending unit is specifically configured to:
determine a mobility management entity according to the mobility management entity identification information in the context of the UE on the access network, and send a request message to the determined mobility management entity; or determine a mobility management entity according to the mobility management entity identification information in the context of the UE in the location area, and send a request message to the determined mobility management entity.

4. The apparatus according to any one of claims 1 to 3, wherein the obtaining unit is specifically configured to:
obtain identification information of UE on the access network, wherein the UE is determined by a core network according to UE subscription information; or obtain identification information of UE on the access network, wherein the UE is heavy-traffic UE on a core network.

5. The apparatus according to any one of claims 1 to 4, wherein the UE information comprises at least one of an IMSI (International Mobile Subscriber Identity, international mobile subscriber identity), a PDN ID (Packed Data Network Identify, packet data network identity), or network status information of the UE; and
the PDN ID comprises an APN (Access Point Name, access point name), and the network status information comprises user plane congestion status information and resource usage information of the access network on which the UE is located, and data stream transmission rate information of the UE.

6. A method for obtaining user equipment UE information, comprising:
obtaining identification information of UE on an access network;
sending request information to a mobility management entity, wherein the request information comprises the identification information of the UE on the access network, so as to request the mobility management entity to return the UE information according to the identification information of the UE on the access network; and
obtaining the UE information returned by the mobility management entity.

7. The method according to claim 6, wherein the identification information of the UE on the access network comprises an MME UE S1-AP Id and/or an eNB UE S1-AP Id.

8. The method according to claim 6, wherein the method further comprises:
obtaining mobility management entity identification information in a context of UE on the access network or mobility management entity identification information in a context of UE in a location area; and
the sending request information to a mobility management entity comprises:
determining a mobility management entity according to the mobility management entity identification information in the context of the UE on the access network, and sending a request message to the determined mobility management entity; or determining a mobility management entity according to the mobility management entity identification information in the context of the UE in the location area, and sending a request message to the determined mobility management entity.

9. The method according to any one of claims 6 to 8, wherein the obtaining identification information of UE on an access network comprises:
obtaining identification information of UE on the access network, wherein the UE is determined by a core network according to UE subscription information; or obtaining identification information of UE on the access network, wherein the UE is heavy-traffic UE on a core network.

10. The method according to any one of claims 6 to 9, wherein the UE information comprises at least one of an IMSI, a PDN ID, or network status information of the UE; wherein
the PDN ID comprises an APN, and the network status information comprises user plane congestion status information and resource usage information of the access network on which the UE is located, and data stream transmission rate information of the UE.

11. An apparatus for obtaining user equipment UE information, comprising:
an obtaining unit, configured to obtain access network information or location area information; and
a processing unit, configured to determine a mobility management entity to which UE on the access network or in the location area is attached; wherein
the obtaining unit is further configured to receive UE information returned by the mobility management entity according to the access network information or the location area information.

12. The apparatus according to claim 11, wherein the processing unit is specifically configured to:
obtain mobility management entity identification information in a context of UE on the access network or mobility management entity identification information in a context of UE in the location area; and
determine, according to the mobility management entity identification information in the context of the UE on the access network, a mobility management entity to which the UE on the access network is attached; or determine, according to the mobility management entity identification information in the context of the UE in the location area, a mobility management entity to which the UE in the location area is attached.

13. The apparatus according to either of claims 11 and 12, wherein the access network information comprises an eNB id, and the location area information comprises a cell id.

14. The apparatus according to any one of claims 11 to 13, wherein the UE information comprises at least one of an IMSI, a PDN ID, or network status information of the UE; wherein
the PDN ID comprises an APN, and the network status information comprises user plane congestion status information and resource usage information of the access network on which the UE is located, and data stream transmission rate information of the UE.

15. A method for obtaining user equipment UE information, comprising:
obtaining access network information or location area information;
determining a mobility management entity to which UE on the access network or in the location area is attached; and
receiving UE information returned by the mobility management entity according to the access network information or the location area information.

16. The method according to claim 15, wherein the determining a mobility management entity to which UE on the access network or in the location area is attached comprises:
obtaining mobility management entity identification information in a context of UE on the access network or mobility management entity identification information in a context of UE in the location area; and
determining, according to the mobility management entity identification information in the context of the UE on the access network, a mobility management entity to which the UE on the access network is attached; or determining, according to the mobility management entity identification information in the context of the UE in the location area, a mobility management entity to which the UE in the location area is attached.

17. The method according to either of claims 15 and 16, wherein the access network information comprises an eNB id, and the location area information comprises a cell id.

18. The method according to either of claims 15 and 17, wherein the UE information comprises at least one of an IMSI, a PDN ID, or network status information of the UE; wherein
the PDN ID comprises an APN, and the network status information comprises user plane congestion status information and resource usage information of the access network on which the UE is located, and data stream transmission rate information of the UE.

19. A policy control processing apparatus, comprising:
an obtaining unit, configured to obtain identification information of a policy control apparatus; and
a sending unit, configured to send UE information to a first policy control apparatus identified by the identification information.

20. The apparatus according to claim 19, wherein the sending unit is specifically configured to:
send the UE information to the first policy control apparatus by means of aggregation; and
the apparatus further comprises:
a receiving unit, configured to: if the UE is UE that cannot be identified by the first policy control apparatus, receive at least one of the following three pieces of information sent by the first policy control apparatus: a result, a cause value, or the UE information.

21. The apparatus according to claim 20, wherein the sending unit is further configured to:
send the UE information to a second policy control apparatus by means of non-aggregation.

22. The apparatus according to claim 21, wherein the sending unit is further configured to:
before sending the UE information to the second policy control apparatus by means of non-aggregation, obtain location area information or network information of the UE from a mobility management entity.

23. The apparatus according to claim 19, wherein the sending unit is specifically configured to:
send the UE information to the first policy control apparatus by means of non-aggregation.

24. The apparatus according to claim 23, wherein the sending unit is specifically configured to:
if the first policy control apparatus identified by the identification information is reset, send the UE information to the first policy control apparatus by means of non-aggregation.

25. The apparatus according to either of claims 20 and 23, wherein the apparatus further comprises:
a deletion unit, configured to delete identification information of the first policy control apparatus.

26. The apparatus according to any one of claims 19 to 25, wherein the policy control apparatus comprises a PCRF (Policy and Charging Rule Function, policy and charging rules function entity).

27. The apparatus according to any one of claims 19 to 26, wherein the UE information comprises at least one of an IMSI, a PDN ID, or network status information of the UE; wherein
the PDN ID comprises an APN, and the network status information comprises user plane congestion status information and resource usage information of an access network on which the UE is located, and data stream transmission rate information of the UE.

28. A policy control processing method, comprising:
obtaining identification information of a policy control apparatus; and
sending UE information to a first policy control apparatus identified by the identification information.

29. The method according to claim 28, wherein the sending UE information to a first policy control apparatus identified by the identification information comprises:
sending the UE information to the first policy control apparatus by means of aggregation; and
the method further comprises:
if the UE is UE that cannot be identified by the first policy control apparatus, receiving at least one of the following three pieces of information sent by the first policy control apparatus: a result, a cause value, or the UE information.

30. The method according to claim 29, wherein after the receiving at least one of the following three pieces of information sent by the first policy control apparatus: a result, a cause value, or the UE information, the method further comprises:
sending the UE information to a second policy control apparatus by means of non-aggregation.

31. The method according to claim 30, before the sending the UE information to a second policy control apparatus by means of non-aggregation, further comprising:
obtaining location area information or network information of the UE from a mobility management entity.

32. The method according to claim 28, wherein the sending UE information to a first policy control apparatus identified by the identification information comprises:
sending the UE information to the first policy control apparatus by means of non-aggregation.

33. The method according to claim 32, wherein the sending UE information to a first policy control apparatus identified by the identification information comprises:
if the first policy control apparatus identified by the identification information is reset, sending the UE information to the first policy control apparatus by means of non-aggregation.

34. The method according to either of claims 29 and 32, wherein the method further comprises:
deleting identification information of the first policy control apparatus.

35. The method according to any one of claims 28 to 34, wherein the policy control apparatus comprises a PCRF.

36. The method according to any one of claims 28 to 35, wherein the UE information comprises at least one of an IMSI, a PDN ID, or network status information of the UE; wherein
the PDN ID comprises an APN, and the network status information comprises user plane congestion status information and resource usage information of an access network on which the UE is located, and data stream transmission rate information of the UE.

37. An apparatus for obtaining user equipment UE information, comprising:
an obtaining unit, configured to obtain identification information of UE on an access network; and
a sending unit, configured to send request information to a function device that stores UE identification information in a mobility management entity, wherein the request information comprises the identification information of the UE on the access network, so as to request the function device that stores the UE identification information in the mobility management entity to return the UE information according to the identification information of the UE on the access network; wherein
the obtaining unit is further configured to obtain the UE information returned by the function device that stores the UE identification information in the mobility management entity.

38. The apparatus according to claim 37, wherein:
the request information sent by the sending unit further comprises identification information of the mobility management entity, so as to request the function device that stores the UE identification information in the mobility management entity to obtain information about the mobility management entity according to the identification information of the mobility management entity.

39. A method for obtaining user equipment UE information, comprising:
obtaining identification information of UE on an access network;
sending request information to a function device that stores UE identification information in a mobility management entity, wherein the request information comprises the identification information of the UE on the access network, so as to request the function device that stores the UE identification information in the mobility management entity to return the UE information according to the identification information of the UE on the access network; and
obtaining the UE information returned by the function device that stores the UE identification information in the mobility management entity.

40. The method according to claim 39, wherein the request information further comprises identification information of the mobility management entity, so as to request the function device that stores the UE identification information in the mobility management entity to obtain information about the mobility management entity according to the identification information of the mobility management entity.

41. An apparatus for obtaining user equipment UE information, wherein the apparatus for obtaining user equipment UE information comprises a network interface, a memory, and a processor, wherein the memory stores a group of program code, and the processor is configured to invoke the program code stored in the memory to execute the following operations:
obtaining identification information of UE on an access network by using the network interface;
sending request information to a mobility management entity by using the network interface, wherein the request information comprises the identification information of the UE on the access network, so as to request the mobility management entity to return the UE information according to the identification information of the UE on the access network; and
obtaining, by using the network interface, the UE information returned by the mobility management entity.

42. An apparatus for obtaining user equipment UE information, wherein the apparatus for obtaining user equipment UE information comprises a network interface, a memory, and a processor, wherein the memory stores a group of program code, and the processor is configured to invoke the program code stored in the memory to execute the following operations:
obtaining access network information or location area information by using the network interface;
determining a mobility management entity to which UE on the access network or in the location area is attached, and sending, by using the network interface, the access network information or the location area information to the determined mobility management entity; and
receiving, by using the network interface, UE information returned by the mobility management entity according to the access network information or the location area information.

43. A policy control processing apparatus, wherein the policy control processing apparatus comprises a network interface, a memory, and a processor, wherein the memory stores a group of program code, and the processor is configured to invoke the program code stored in the memory to execute the following operations:
obtaining identification information of a policy control apparatus; and
sending UE information to a first policy control apparatus identified by the identification information.

44. An apparatus for obtaining user equipment UE information, wherein the apparatus for obtaining user equipment UE information comprises a network interface, a memory, and a processor, wherein the memory stores a group of program code, and the processor is configured to invoke the program code stored in the memory to execute the following operations:
obtaining identification information of UE on an access network by using the network interface;
sending, by using the network interface, request information to a function device that stores UE identification information in a mobility management entity, wherein the request information comprises the identification information of the UE on the access network, so as to request the function device that stores the UE identification information in the mobility management entity to return the UE information according to the identification information of the UE on the access network; and
obtaining, by using the network interface, the UE information returned by the function device that stores the UE identification information in the mobility management entity.

45. A computer storage medium, wherein the computer storage medium stores a program, and when the program is executed, the steps according to any one of claims 6 to 10 are performed.

46. A computer storage medium, wherein the computer storage medium stores a program, and when the program is executed, the steps according to any one of claims 15 to 18 are performed.

47. A computer storage medium, wherein the computer storage medium stores a program, and when the program is executed, the steps according to any one of claims 28 to 36 are performed.

48. A computer storage medium, wherein the computer storage medium stores a program, and when the program is executed, the steps according to either of claims 39 and 40 are performed.
